# EUROPÄISCHE PATENTANMELDUNG

(11) **EP 1 596 484 A1**
(43) Veröffentlichungstag der Anmeldung: **16.11.2005**
(21) Anmeldenummer: 04011173.4
(22) Anmeldetag: 11.05.2004
(51) Int. Cl.: H02J 4/00

(54) **Energiemanagementmodul**

(71) Anmelder: SFC Smart Fuel Cell GmbH, 85649 Brunnthal-Nord (DE)
(72) Erfinder: Stefener, Manfred, 81827 München (DE)
(74) Vertreter: Grünecker, Kinkeldey, Stockmair & Schwanhäusser Anwaltssozietät

(57) **Zusammenfassung**

Die Erfindung betrifft ein tragbares Energiemanagement-Modul zur Kopplung von Quellen elektrischer Energie mit Verbrauchern elektrischer Energie, umfassend mehrere Eingangs-Schnittstellen zum Anschließen von Quellen elektrischer Energie; mehrere Ausgangs-Schnittstellen zum Anschließen von Verbrauchern elektrischer Energie; und wenigstens eine Energiemanagement-Einrichtung zur Kopplung von Eingangs-Schnittstellen mit Ausgangs-Schnittstellen, derart, dass wenigstens die folgenden Kopplungen hergestellt werden können: eine erste Eingangs-Schnittstelle mit einer ersten Ausgangs-Schnittstelle, eine zweite Eingangs-Schnittstelle mit der ersten Ausgangs-Schnittstelle, die erste und/oder die zweite Eingangs-Schnittstelle mit einer zweiten Ausgangs-Schnittstelle.

Die Erfindung betrifft weiterhin ein Energiemanagement-Modul-System, umfassend wenigstens zwei Energiemanagement-Module, die miteinander verbunden sind.

## Beschreibung

### Gebiet der Erfindung

Die Erfindung betrifft ein tragbares Energiemanagement-Modul zur Kopplung von Quellen elektrischer Energie mit Verbrauchern elektrischer Energie. Die Erfindung betrifft weiterhin ein Energiemanagement-Modul-System.

### Stand der Technik

Einerseits existiert eine Vielzahl von Quellen elektrischer Energie, die elektrischen Strom zur Verfügung stellen, wie z.B. primäre und sekundäre Batterien, Solarzellen, Brennstoffzellen, verbrennungsmotorisch oder durch Wind- oder Wasserkraft betriebene Generatoren, thermoelektrische Generatoren usw. Solche Quellen liefern elektrische Energie mit für sie charakteristischen, zum Teil jedoch sehr unterschiedlichen elektrischen Parametern.

Andererseits existiert eine enorme Vielzahl von Verbrauchern elektrischer Energie, wie z.B. elektrisch betriebene Geräte. Solche Verbraucher nehmen die elektrische Energie mit für sie geeigneten und charakteristischen, zum Teil jedoch sehr unterschiedlichen elektrischen Parametern auf. Zudem können diese Verbraucher in der Regel nur über eine sehr kleine Anzahl verschiedener Anschlüsse mit elektrischer Energie versorgt werden, oft gibt es sogar nur einen Anschluss, wobei diese Anschlüsse häufig als Steckverbindungen ausgestaltet sind.

Die genannten elektrischen Parameter umfassen unter anderem die Stromart, also ob es sich um Gleich-, Wechsel- oder Drehstrom handelt, gegebenenfalls die Frequenz und die Amplitude, gegebenenfalls die Polarität, die Spannung, die Stromstärke, oder auch dynamische Parameter, wie beispielsweise die Peakfestigkeit, usw.

Bei dem Betrieb eines elektrischen Gerätes mit einer Energiequelle muss darauf geachtet werden, dass die elektrischen Parameter zwischen Energiequelle und Verbraucher genau aufeinander abgestimmt sind.

Es bestehen deshalb starke Einschränkungen hinsichtlich der Kombinationsmöglichkeiten zwischen den zur Verfügung stehenden Quellen elektrischer Energie und den zu betreibenden Verbrauchern elektrischer Energie. Beispielsweise ist es nicht möglich, mit einem Ladegerät für einen Laptop ein Mobiltelefon zu betreiben, mit einer Autobatterie einen Wechselstromtransformator zu betreiben oder mit einem Wechselstromgenerator ein Gleichstromverbraucher zu betreiben, ohne für jeden der genannten Fälle einen speziell entwickelten Adapter verfügbar zu haben. Jeder dieser Adapter muss passende, in der Regel mechanische Schnittstellen aufweisen und passende elektrische Umwandlungen bereitstellen, z.B. Spannungswandlung, Gleich- bzw. Wechselrichtung und/oder beim Laden einer Batterie zusätzlich eine mehr oder weniger intelligente Laderegelung.

Diese Situation führt dazu, dass in einigen Märkten eine enorme Vielfalt an einzelnen Adaptern existiert. Das ist mit hohen Kosten verbunden und erfordert einen nachteiligen logistischen Aufwand. Bei mobilen Anwendungen, wie z.B. militärischen Missionen, wirken sich weiterhin der Platzbedarf und das Gewicht der notwendigen Vielzahl an Adaptern, die mitgeführt werden müssen, nachteilig aus.

Aus dem Stand der Technik sind Vorrichtungen bekannt, die eine Quelle mit mehreren Verbrauchern koppeln kann, z.B. in Form einer Steckerleiste, wobei auf der Verbraucherseite an den Ausgängen die gleiche elektrische Spannung abgegriffen werden kann, so dass mehrere Verbraucher mit der gleichen Spannung von einer Quelle betrieben werden können. Weiterhin gibt es Netzadapter, die eine Verbindung einer Quelle mit einem Verbraucher ermöglichen, die eine variable Spannungswandlung gestatten, so dass die von dem jeweiligen Verbraucher benötigte Spannung an dem Ausgang des Netzadapters eingestellt werden kann.

Aus dem Stand der Technik sind auch sogenannte Hybridlösungen bekannt, bei denen ein Verbraucher von mehreren Quellen gleichzeitig versorgt wird. Derartige Vorrichtungen sind jedoch zumindest teilweise in ein Gerät eingebaut, wie z.B. bei der gleichzeitigen Versorgung mobiler Geräte (Laptop, Mobiltelefon, etc.) mit Energie aus einer aufladbaren Batterie und mit Netzenergie, wobei letztere noch über einen Adapter einer Spannungswandlung unterzogen wird, bevor sie dem Gerät zugeführt wird. Eine derartige Hybridlösung ist jedoch auf genau einen Verbraucher abgestimmt und ist zudem insbesondere nicht unabhängig von diesem als mobiler, tragbarer Adapter einsetzbar.

### Beschreibung der Erfindung

Angesichts der Nachteile des Stands der Technik, liegt der Erfindung das Problem zugrunde, ein tragbares Energiemanagement-Modul und ein Energiemanagement-Modul-System bereitzustellen, das bezüglich Art und Anzahl der angeschlossenen Quellen und Verbraucher hohe Flexibilität bietet und dadurch die Vielzahl der gemäß des Stands der Technik benötigten speziellen Adapter stark reduziert und dabei kompakt ist, wodurch es für mobile Anwendungen verwendbar ist, und weiterhin, in hohem Maße universell einsetzbar ist.

Das zuvor genannte Problem wird gelöst durch ein erfindungsgemäßes tragbares Energiemanagement-Modul zur Kopplung von Quellen elektrischer Energie mit Verbrauchern elektrischer Energie, umfassend mehrere Eingangs-Schnittstellen zum Anschließen von Quellen elektrischer Energie; mehrere Ausgangs-Schnittstellen zum Anschließen von Verbrauchern elektrischer Energie; und wenigstens eine Energiemanagement-Einrichtung zur Kopplung von Eingangs-Schnittstellen mit Ausgangs-Schnittstellen, derart, dass wenigstens die folgenden Kopplungen hergestellt werden können: eine erste Eingangs-Schnittstelle mit einer ersten Ausgangs-Schnittstelle, eine zweite Eingangs-Schnittstelle mit der ersten Ausgangs-Schnittstelle, die erste und/oder die zweite Eingangs-Schnittstelle mit einer zweiten Ausgangs-Schnittstelle.

Das genannte Problem wird weiterhin gelöst durch ein Energiemanagement-Modul-System, das wenigstens zwei erfindungsgemäße Energiemanagement-Module, die miteinander verbunden sind, umfasst.

Ein erfindungsgemäßes Energiemanagement-Modul zeichnet sich dadurch aus, dass es mehrere Eingangs-Schnittstellen zum Anschließen von verfügbaren Quellen von elektrischer Energie umfasst. Auf diese Weise stehen auf der Eingangsseite des Energiemanagement-Moduls zumindest zwei Anschlüsse für Quellen von elektrischer Energie bereit, die einzeln oder kombiniert daran angeschlossen werden können. Beispielsweise können daran eine 12V-(Auto-) Batterie, eine Brennstoffzelle, eine Solarzelle, ein Dieselgenerator oder Netzstrom, etc., angeschlossen werden.

Ein erfindungsgemäßes Energiemanagement-Modul zeichnet sich weiterhin dadurch aus, dass es mehrere Ausgangs-Schnittstellen zum Anschließen von Verbrauchern elektrischer Energie umfasst. Auf diese Weise stehen auf der Ausgangsseite des Energiemanagement-Moduls zumindest zwei Anschlüsse für Verbraucher von elektrischer Energie bereit, die einzeln oder kombiniert daran angeschlossen werden können. Beispielsweise können daran ein Laptop, ein Funkgerät, ein Mobiltelefon, eine Lampe oder eine Batterie zum Aufladen, etc., angeschlossen werden.

Ein erfindungsgemäßes Energiemanagement-Modul zeichnet sich weiterhin dadurch aus, dass es wenigstens eine Energiemanagement-Einrichtung zur Kopplung von Eingangs-Schnittstellen mit Ausgangs-Schnittstellen umfasst, derart, dass wenigstens die folgenden Kopplungen hergestellt werden können: eine erste Eingangs-Schnittstelle mit einer ersten Ausgangs-Schnittstelle, eine zweite Eingangs-Schnittstelle mit der ersten Ausgangs-Schnittstelle, die erste und/oder die zweite Eingangs-Schnittstelle mit einer zweiten Ausgangs-Schnittstelle. Dadurch ist es wenigstens möglich, eine an einer ersten Eingangs-Schnittstelle angeschlossene erste Quelle und eine an einer zweiten Eingangs-Schnittstelle angeschlossene zweite Quelle mit eine an einer ersten Ausgangs-Schnittstelle angeschlossenen ersten Verbraucher zu koppeln und somit den ersten Verbraucher mit Energie aus der ersten und/oder zweiten Quelle zu betreiben, und zusätzlich, dass die erste oder zweite Quelle, alternativ auch beide, mit einem an einer zweiten Ausgangs-Schnittstelle angeschlossenen zweiten Verbraucher koppelbar ist, wodurch der zweite Verbraucher ebenfalls mit Energie aus der ersten und/oder zweiten Quelle betrieben werden kann.

Das zuvor genannte Energiemanagement-Modul kann wie im Folgenden beschrieben weitergebildet werden.

Eine Weiterbildung des Energiemanagement-Moduls besteht darin, dass die Energiemanagement-Einrichtung einen elektrischen Wandler oder mehrere elektrische Wandler zur Abstimmung der elektrischen Parameter der Quellen mit den elektrischen Parametern der Verbraucher aufweisen kann. Dadurch können die elektrischen Wandler die elektrischen Parameter der Quellen und die elektrischen Parameter der Verbraucher aufeinander abstimmen. Beispielsweise kann auf diese Weise die 12 V Spannung einer Brennstoffzelleneinrichtung als Quelle zur Kopplung mit einem Laptop als Verbraucher auf 9 V gewandelt werden.

Eine Weiterbildung des Energiemanagement-Moduls besteht darin, dass wenigstens zwei Eingangs-Schnittstellen zum Anschließen von verschiedenen Quellen elektrischer Energie ausgestaltet sind und/oder wenigstens zwei Ausgangs-Schnittstellen zum Anschließen von verschiedenen Verbrauchern elektrischer Energie ausgestaltet sein können. Dies hat den Vorteil, dass verschiedenartige Quellen und/oder verschiedenartige Verbraucher angeschlossen werden und miteinander gekoppelt werden können.

Eine andere Weiterbildung des Energiemanagement-Moduls besteht darin, dass die elektrischen Wandler wenigstens einen Spannungswandler und/oder wenigstens einen Stromstärkewandler und/oder wenigstens einen Stromphasenwandler und/oder wenigstens einen Stromgleichrichter und/oder wenigstens einen Stromwechselrichter und/oder wenigstens einen Polaritätswandler und/oder wenigstens einen Schaltregler und/oder wenigstens einen Transverter und/oder wenigstens einen Frequenzwandler und/oder wenigstens einen Frequenzfilter und/oder wenigstens einen dynamischen Wandler und/oder wenigstens einen Laderegler umfassen können. Dadurch ist es möglich, die Spannung und/oder die Stromstärke und/oder die Stromphase und/oder die Stromrichtung und/oder die Polarität und/oder die Frequenz zu wandeln, wobei im Falle der Spannungswandlung auch ein Überspannungsschutz enthalten sein kann. Weiterhin ist es möglich, Wechselstrom, Gleichstrom und Drehstrom ineinander umzuwandeln. Beispielsweise ist es somit möglich, einen Wechselstromgenerator, der Wechselstrom mit einer ersten Spannungsamplitude liefert, und eine Brennstoffzelle, die Gleichstrom mit einer zweiten Spannung liefert, an die Eingangs-Schnittstellen anzuschließen, und mit beiden Energiequellen einen an eine Ausgangs-Schnittstelle angeschlossenen Laptop mit Gleichstrom einer dritten Spannung zu betreiben, oder auch zusätzlich noch eine Lampe mit Wechselstrom einer vierten Spannungsamplitude. In diesem Beispiel kann die Energie gleichzeitig aus zwei Quellen an ein oder zwei Verbraucher mit den verbraucherspezifisch gewandelten elektrischen Parametern geliefert werden. In einem anderen Beispiel kann etwa eine angeschlossene Autobatterie als Quelle einen angeschlossenen Wechselstromtransformator als Verbraucher betreiben, der dann das Erzeugen noch höherer Spannungen, als sie im Rahmen der Möglichkeiten der elektrischen Wandler des Energiemanagement-Moduls möglich sind, erlaubt. Zusätzlich könnte dann die Autobatterie auch noch einen anderen Verbraucher, etwa ein Funkgerät, mit Gleichstrom einer bestimmten Spannung versorgen. Des Weiteren können mit Hilfe von Schaltreglern und/oder Transvertern Spannungswandler und -regler mit hoher Leistungsfähigkeit und mit hohem Wirkungsgrad zur Verfügung gestellt werden, und es kann aus einer kleinen Gleichspannung eine wesentlich größere erzeugt werden. Der wenigstens eine Laderegler kann für eine als angeschlossene, zu ladende Batterie eine geeignete Ladereglung durchführen.

Eine andere Weiterbildung des Energiemanagement-Moduls besteht darin, dass es weiterhin eine Detektionseinrichtung umfassen kann, die automatisch detektiert, ob und an welcher Eingangs-Schnittstelle eine Quelle angeschlossen ist und/oder ob und an welcher Ausgangs-Schnittstelle ein Verbraucher angeschlossen ist, und/oder die automatisch detektiert, welche Quelle und/oder welcher Verbraucher aus einer vorbestimmten Auswahl von möglichen Quellen bzw. möglichen Verbrauchern an eine Eingangs-Schnittstelle bzw. eine Ausgangs-Schnittstelle angeschlossenen ist. Auf diese Weise kann das Energiemanagement-Modul automatisch feststellen, ob und an welcher Eingangs-Schnittstelle eine Quelle angeschlossen ist und/oder ob und an welcher Ausgangs-Schnittstelle ein Verbraucher angeschlossen ist, um beispielsweise daraufhin die entsprechenden Schnittstellen zu aktivieren, bzw. um nicht belegte Schnittstellen zu deaktivieren. Weiterhin hat diese Weiterbildung den Vorteil, dass zusätzlich oder als Alternative automatisch erkannt wird, welche Quellen und/oder welche Verbraucher angeschlossen sind, um beispielsweise daraufhin die entsprechenden elektrischen Wandler zu aktivieren bzw. diese geeignet zwischen die Quellen und die Verbraucher zu schalten.

Eine andere Weiterbildung des Energiemanagement-Moduls besteht darin, dass die Detektionseinrichtung wenigstens eine kodierte Schnittstelle umfassen kann und/oder wenigstens eine Messeinrichtung zum Messen der elektrischen Parameter der angeschlossenen Quellen und Verbraucher umfassen kann. Durch kodierte Schnittstellen können auf einfache Weise angeschlossene Quellen und Verbraucher erkannt werden. Zusätzlich, oder als Alternative, kann diese Erkennung in dieser Weiterbildung durch Messen der elektrischen Parameter der angeschlossenen Quellen und Verbraucher erfolgen, wodurch die Quellen und/oder Verbraucher beispielsweise durch deren Leistungscharakteristik identifiziert werden können.

Eine andere Weiterbildung des Energiemanagement-Moduls besteht darin, dass die Energiemanagement-Einrichtung so ausgestaltet sein kann, dass vorbestimmte Eingangs-Schnittstellen mit vorbestimmten Ausgangs-Schnittstellen koppelbar sind. Dadurch ist es beispielsweise möglich, dass einige Kopplungsvarianten von Schnittstellen und die entsprechenden elektrischen Wandler für einen hohen Leistungsbedarf ausgelegt sind, während andere Schnittstellenkopplungen einem niedrigen Leistungsbedarf vorbehalten sind.

Eine andere Weiterbildung des Energiemanagement-Moduls besteht darin, dass die Energiemanagement-Einrichtung so ausgestaltet sein kann, dass die Eingangs-Schnittstellen mit angeschlossenen Quellen automatisch mit den Ausgangs-Schnittstellen mit angeschlossenen Verbrauchern koppelbar sind. Auf diese Weise können die Schnittstellen flexibel und bequem eingesetzt werden, weil die entsprechenden Kopplungen automatisch durchgeführt werden. Dies ist insbesondere auch mit der automatischen Detektion der Quellen und/oder Verbraucher vorteilhaft zu kombinieren.

Eine andere Weiterbildung des Energiemanagement-Moduls besteht darin, dass es weiterhin Schaltereinrichtungen umfassen kann, so dass in Abhängigkeit der Energiebereitstellung durch die Quellen und/oder des Energiebedarfs der Verbraucher einzelne Eingangs-Schnittstellen und/oder Ausgangs-Schnittstellen manuell und/oder automatisch zu- und/oder abschaltbar sind. Dadurch können beispielsweise bei zeitweise erhöhtem Energie- oder Leistungsbedarf Quellen hinzugeschaltet und/oder nicht notwendige Verbraucher von der Energieversorgung abgetrennt werden.

Eine andere Weiterbildung des Energiemanagement-Moduls besteht darin, dass die Energiemanagement-Einrichtung so ausgestaltet sein kann, dass eine automatische Priorisierung vorbestimmter Quellen und/oder vorbestimmter Verbraucher erfolgt. Auf diese Weise ist es möglich, aufgrund vorbestimmter Prioritäten, bei beispielsweise erhöhtem Energiebedarf der Verbraucher, weniger wichtige Verbraucher zumindest zeitweise abzukoppeln, um die Energieversorgung der wichtigeren Verbraucher aufrecht zu erhalten. Genauso kann natürlich auch bei einem Leistungsabfall einer Quelle, z. B. einer Batterie, verfahren werden.

Eine andere Weiterbildung des Energiemanagement-Moduls besteht darin, dass wenigstens eine Eingangs-Schnittstelle in eine Ausgangs-Schnittstelle und/oder wenigstens eine Ausgangs-Schnittstelle in eine Eingangs-Schnittstelle manuell oder automatisch umschaltbar sein kann. Dies hat den Vorteil, dass beispielsweise eine als Quelle angeschlossene aufladbare Batterie bei abgesunkenem Ladezustand durch Umschalten der entsprechenden Eingangs-Schnittstelle in eine Ausgangs-Schnittstelle als Verbraucher einem Ladevorgang unterzogen werden kann, ohne dass die Schnittstelle gewechselt werden muss. Vorteilhafterweise kann dabei eine andere angeschlossene Quelle, beispielsweise eine Brennstoffzelle oder auch Netzstrom, zum Laden verwendet werden. Diese Weiterbildung lässt sich vorteilhaft insbesondere mit einer automatischen Priorisierung vorbestimmter Quellen und/oder Verbraucher kombinieren, so dass beispielsweise während eines zeitweilig gesunkenen Energiebedarfs der Verbraucher, die Batterie von einer anderen angeschlossenen Quelle wieder aufgeladen wird.

Eine andere Weiterbildung des Energiemanagement-Moduls besteht darin, dass wenigstens eine oder mehrere Schnittstellen in Form von Steckverbindungen ausgestaltet sein kann, und/oder wobei wenigstens eine Schnittstelle eine Induktions-Einrichtung zum induktiven Anschließen von Quellen und/oder Verbrauchern umfassen kann. Wenn die Schnittstellen in Form von Steckverbindungen ausgestaltet sind, ist eine sicheres, bequemes, leicht wieder lösbares und stabiles Anschließen möglich. Durch Bereitstellen von Induktions-Schnittstellen können Verbraucher ohne direkte elektrische Kontakte angeschlossen werden.

Eine andere Weiterbildung des Energiemanagement-Moduls besteht darin, dass an die Eingangs-Schnittstellen eine Batterie und/oder eine Brennstoffzelle und/oder eine Solarzelle und/oder ein Dieselgenerator und/oder ein Stromnetz, und/oder an die Ausgangs-Schnittstellen ein Laptop und/oder ein Funkgerät und/oder eine Lampe und/oder wenigstens eine Batterie zum Laden anschließbar sein können. Dies ermöglicht das Anschließen von gebräuchlichen Quellen und/oder Verbrauchern elektrischer Energie.

Eine andere Weiterbildung des Energiemanagement-Moduls besteht darin, dass die Energiemanagement-Einrichtung so ausgestaltet ist, dass beim Laden der wenigstens einen Batterie eine Laderegelung erfolgen kann. Dies hat den Vorteil, dass die Batterie gemäß ihrer Kapazität bzw. entsprechend ihres Restladungszustands geladen wird, insbesondere, dass sie nicht überladen und damit geschädigt wird, oder auch dass vor dem tatsächlichen Aufladen eine Restentladung durchgeführt wird.

Eine andere Weiterbildung des Energiemanagement-Moduls besteht darin, dass es weiterhin wenigstens eine eigene Energiequelle und/oder wenigstens einen eigenen Energiespeicher umfassen kann, wobei letzterer als dynamischer Energiespeicher ausgestaltet sein kann. Auf diese Weise kann etwa eine möglicherweise vorhandene Informationsspeichereinrichtung, die weiter unten beschrieben ist, auch ohne angeschlossene Quellen weiterhin mit Energie versorgt werden, so dass gespeicherte Informationen nicht verloren gehen, oder auch, dass auf einer möglicherweise vorhandenen Anzeigeeinrichtung, die weiter unten beschrieben ist, weiterhin Informationen angezeigt werden können. Im Falle eines dynamischen Energiespeichers, beispielsweise in Form eines Kondensators, können zeitlich kurze Leistungsspitzen der Verbraucher abgedeckt werden, wobei der Kondensator bei durchschnittlichem Leistungsbedarf wieder von einer oder mehreren Quellen aufgeladen wird.

Eine andere Weiterbildung des Energiemanagement-Moduls besteht darin, dass es weiterhin eine Informationsspeichereinrichtung zur Speicherung von Daten umfassen kann, und/oder eine Mikroprozessoreinrichtung umfassen kann, in der ein Computerprogramm zur automatischen Steuerung der Eingangs- und/oder der Ausgangs-Schnittstellen und/oder der elektrischen Wandler ausgeführt werden kann. Dadurch können auf der Informationsspeichereinrichtung z.B. charakteristische Daten bestimmter Quellen und/oder Verbraucher abgelegt sein, die dann zur Identifizierung angeschlossener Quellen und/oder Verbraucher verfügbar sind. Weiterhin kann in dieser Weiterbildung die Steuerung der Schnittstellen und/oder der Wandler als intelligente Steuerung in Form eines Computerprogramms, das in der Mikroprozessoreinrichtung abläuft, ausgestaltet sein.

Eine andere Weiterbildung des Energiemanagement-Moduls besteht darin, dass es weiterhin wenigstens eine Kommunikationseinrichtung umfassen kann. Das hat den Vorteil, dass beispielsweise Daten über den aktuellen Zustand angeschlossener Quellen und/oder Verbraucher weitergeleitet und/oder empfangen werden können.

Eine andere Weiterbildung des Energiemanagement-Moduls besteht darin, dass die wenigstens eine Kommunikationseinrichtung eine Computerschnittstelle umfassen kann, an die ein Computer zur Datenübermittlung anschließbar ist, und/oder eine Funkschnittstelle umfasst, an die eine Funkeinrichtung zur Datenübermittlung anschließbar ist. Dadurch kann beispielsweise über die Computerschnittstelle ein Update des Computerprogramms in die Mikroprozessoreinrichtung übertragen werden. Weiterhin können Daten der Quellen und Verbraucher zur Weiterverarbeitung an einen Computer übermittelt und abgespeichert werden. Mit einer an die Funkschnittstelle angeschlossenen Funkeinrichtung können derartige Daten auch über große Entfemungen gesendet werden. Eine weitere mögliche Anwendung ist auch bei gleichzeitig verfügbarer Computer- und Funkschnittstelle einen Computer über das Energiemanagement-Modul mittels einer Funkeinrichtung zur Datenfernübertragung zu verwenden, z.B. um eine Intemetverbindung herzustellen.

Eine andere Weiterbildung des Energiemanagement-Moduls besteht darin, dass es weiterhin wenigstens eine Anzeigeeinrichtung zum Anzeigen der Information welche Schnittstellen belegt sind und/oder zum Anzeigen der Information welche Quellen und/oder Verbraucher angeschlossen sind und/oder zum Anzeigen wenigstens eines Teils der elektrischen Parameter der angeschlossenen Quellen und/oder Verbraucher, und/oder zum Anzeigen von Daten der Kommunikationseinrichtung umfassen kann. Dadurch lässt sich beispielsweise der Ladezustand einer Batterie anzeigen und durch den Benutzer überprüfen. Weiterhin kann dadurch beispielsweise angezeigt werden, ob ein Verbraucher und/oder eine Quelle aufgrund mangelnden Energievorrats oder Überlastung zeitweilig abgekoppelt ist.

Eine andere Weiterbildung des Energiemanagement-Moduls besteht darin, dass es weiterhin ein Gehäuse umfassen kann, innerhalb dessen die wenigstens eine Energiemanagement-Einrichtung mit dem oder den elektrischen Wandlern angeordnet ist, und wobei die Eingangs- und Ausgangs-Schnittstellen so in das Gehäuse integriert sind, dass die Quellen und Verbraucher von außerhalb des Gehäuses an die Eingangs- bzw. Ausgangs-Schnittstellen angeschlossen werden können. Dies hat den Vorteil, dass das Energiemanagement-Modul leicht, bequem und sicher zu handhaben ist, weil sich die Energiemanagement-Einrichtung mit den elektrischen Wandlern und der entsprechenden Verschaltung innerhalb des Gehäuses befindet. Des Weiteren sind die Quellen und Verbraucher durch die integrierten Schnittstellen einfach an das Energiemanagement-Modul anzuschließen.

Eine andere Weiterbildung des Energiemanagement-Moduls besteht darin, dass es weiterhin wenigstens eine Kupplungseinrichtung umfassen kann, so dass wenigstens zwei derartige Module lösbar miteinander verbunden werden können, wobei die wenigstens eine Kupplungseinrichtung auch elektrische Verbindungseinrichtungen zu den Eingangs-Schnittstellen und/oder den Ausgangs-Schnittstellen und/oder der wenigstens einen Energiemanagement-Einrichtung umfassen kann. Auf diese Weise ist es möglich, wenigstens zwei erfindungsgemäße Module miteinander zu verbinden, um beispielsweise ein Modul auf hohen und ein anderes Modul auf niedrigen Energie- oder Leitungsbedarf auszulegen, wodurch eine hohe Flexibilität erreicht wird, da möglicherweise nicht immer beide Auslegungen gleichzeitig benötigt werden, so dass aber gegebenenfalls zwei oder mehr Module verbunden und verfügbar sind.

Das erfindungsgemäße Energiemanagement-Modul-System zeichnet sich dadurch aus, dass wenigstens zwei Energiemanagement-Module miteinander verbunden sind. Dieses hat den Vorteil, zwei oder mehr erfindungsgemäße Energiemanagement-Module als System zu einer Einheit zusammenzufassen. Die einzelnen miteinander verbundenen Module können dadurch bedarfsgemäß ausgewählt werden und sind dennoch als Einheit bequem handhabbar.

Die verschiedenen Weiterbildungen lassen sich unabhängig voneinander einsetzen oder geeignet miteinander kombinieren.

Weitere bevorzugte Ausführungsformen der Erfindung werden im Nachfolgenden unter Bezugnahme auf die Zeichnungen beschrieben.

### Kurzbeschreibung der Zeichnungen

Fig. 1 zeigt eine erste Ausführung eines erfindungsgemäßen Energiemanagement-Moduls.

Fig. 2 zeigt eine zweite Ausführung eines erfindungsgemäßen Energiemanagement-Moduls mit einer Detektionseinrichtung.

Fig. 3 zeigt eine dritte Ausführung eines erfindungsgemäßen Energiemanagement-Moduls mit kodierten Schnittstellen und Schaltereinrichtungen.

Fig. 4 zeigt eine vierte Ausführung eines erfindungsgemäßen Energiemanagement-Moduls mit einer eigenen Energiequelle, einer Mikroprozessoreinrichtung, einer Anzeigeeinrichtung und einer Kommunikationsschnittstelle.

Fig. 5 zeigt ein erfindungsgemäßes Energiemanagement-Modul-System.

### Beschreibung der Ausführungsformen

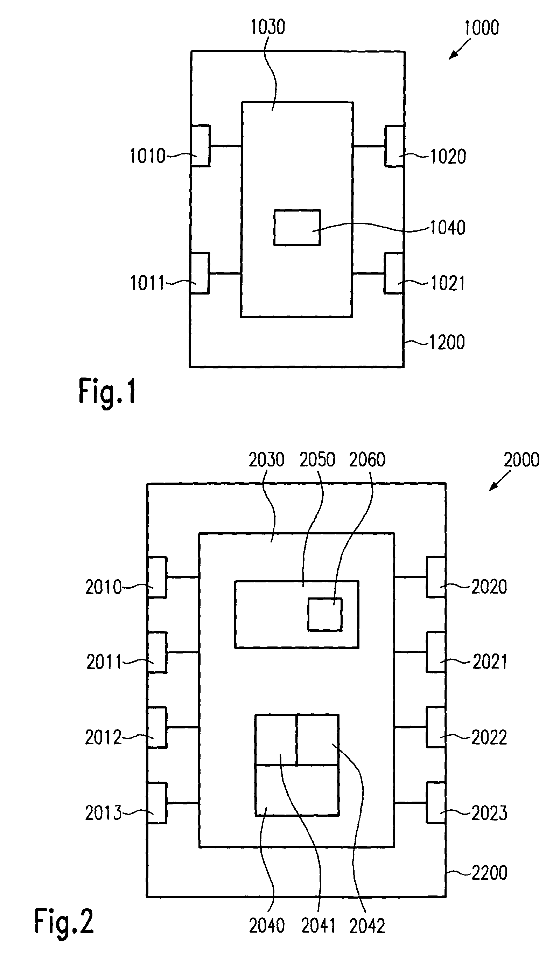

Fig. 1 zeigt eine erste einfache Ausführungsform eines erfindungsgemäßen Energiemanagement-Moduls 1000. Es sind in dieser Ausführungsform als Beispiel zwei Eingangs-Schnittstellen 1010, 1011 zum Anschließen von Quellen elektrischer Energie und zwei Ausgangs-Schnittstellen 1020, 1021 zum Anschließen von Verbrauchern elektrischer Energie vorhanden. Das Energiemanagement-Modul 1000 umfasst vorteilhafterweise ein Gehäuse 1200, wobei die Schnittstellen darin integriert sind, so dass sie von außen für das Anschließen leicht zugänglich sind. In dem Gehäuse befindet sich die Energiemanagement-Einrichtung 1030 mit in diesem Fall einem elektrischen Wandler 1040. Die innerhalb der Energiemanagement-Einrichtung 1030 herzustellenden elektrischen Verbindungen werden hier und in den weiteren Zeichnungen aus Gründen der Übersichtlichkeit nicht dargestellt. Die Energiemanagement-Einrichtung 1030 kann in diesem Beispiel jede der zwei Eingangs-Schnittstellen 1010, 1011 mit der Ausgangs-Schnittstelle 1020 koppeln und weiterhin die Eingangs-Schnittstelle 1011 mit der Ausgangs-Schnittstelle 1021 koppeln. Dadurch kann etwa ein an die Ausgangs-Schnittstelle 1020 angeschlossenes Funkgerät mit Energie aus einer an die Eingangs-Schnittstelle 1010 angeschlossenen 12V Batterie und abwechselnd oder gleichzeitig mit Energie aus einer an die Eingangs-Schnittstelle 1011 angeschlossenen 12V Brennstoffzelleneinrichtung betrieben werden. Weiterhin kann ein an die Ausgangs-Schnittstelle 1021 angeschlossener Verbraucher in diesem Fall mit Energie aus der Brennstoffzelleneinrichtung betrieben werden. Im hier gezeigten Beispiel kann dabei zusätzlich ein elektrischer Wandler 1040 vorgesehen sein, der beispielsweise eine Spannungsanpassung vornimmt, so dass, wenn etwa ein an die Ausgangs-Schnittstelle 1021 angeschlossener Laptop mit 9V Gleichspannung betrieben werden soll, die Spannung der Brennstoffzellenkombination von 12V auf 9V gewandelt wird.

Fig. 2 zeigt eine weitere Ausführungsform der Erfindung. Zur Vermeidung von Wiederholungen wird im Folgenden nur auf die Unterschiede zur vorherigen Ausführungsform eingegangen und im Übrigen auf die Beschreibung von Fig. 1 verwiesen. Sich entsprechende Teile sind in den Zeichnungen mit ähnlichen Bezugszeichen versehen, die sich nur durch die den Tausender bezeichnende Ziffer unterscheiden. Das erfindungsgemäße Energiemanagement-Modul 2000 umfasst in dieser Ausführungsform vier Eingangs-Schnittstellen 2010-2013, vier Ausgangs-Schnittstellen 2020-2023 und drei elektrische Wandler 2040-2042 und unterscheidet sich in dieser Hinsicht nur durch die entsprechende Anzahl der Schnittstellen bzw. der Wandler. Darüber hinaus gibt es eine Detektionseinrichtung 2050 die automatisch detektiert, ob und an welcher Eingangs-Schnittstelle 2010-2013 eine Quelle angeschlossen ist und/oder ob und an welcher Ausgangs-Schnittstelle 2020-2023 ein Verbraucher angeschlossen ist, und/oder die automatisch detektiert, welche Quelle und/oder welcher Verbraucher aus einer vorbestimmten Auswahl von möglichen Quellen bzw. möglichen Verbrauchern an eine Eingangs-Schnittstelle 2010-2013 bzw. eine Ausgangs-Schnittstelle 2020-2023 angeschlossenen ist. Weiterhin umfasst die Detektionseinrichtung 2050 eine Messeinrichtung 2060 zum Messen der elektrischen Parameter der angeschlossenen Quellen und Verbraucher. Damit kann eine Identifikation der angeschlossenen Quellen und Verbraucher mittels gemessener elektrischer Parameter erfolgen, indem beispielsweise die entsprechende Leitungscharakteristik bestimmt wird. Aufgrund der ermittelten Information, können dann Quellen und Verbraucher geeignet miteinander gekoppelt werden und gegebenenfalls notwendige Wandlungen der elektrischen Parameter erfolgen.

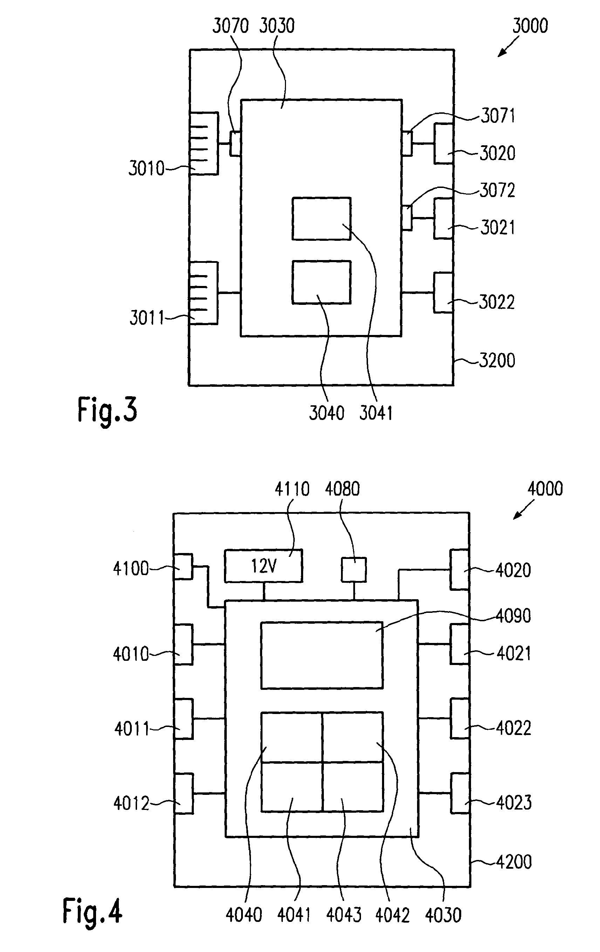

Fig. 3 zeigt eine weitere Ausführungsform der Erfindung. Zur Vermeidung von Wiederholungen wird im Folgenden nur auf die Unterschiede zu den vorherigen Ausführungsformen eingegangen und im Übrigen auf die Beschreibungen von Fig. 1 und 2 verwiesen. Sich entsprechende Teile sind in Fig. 3 mit ähnlichen Bezugszeichen versehen, die sich nur durch die den Tausender bezeichnende Ziffer unterscheiden. Das erfindungsgemäße Energiemanagement-Modul 3000 umfasst in dieser Ausführungsform kodierte Schnittstellen 3010, 3011 und Schaltereinrichtungen 3070-3072. In diesem Beispiel haben die zwei kodierten Eingangs-Schnittstellen 3010, 3011 vier elektrische Kontakte, die einen bestimmten Abstand voneinander haben. Weil für das Anschließen der Quellen in der Regel nur zwei Kontakte benötigt werden, können auf diese Weise die quellenseitigen Anschlüsse zum Detektieren verschiedener Quellen, so ausgebildet werden, dass jeweils zwei verschiedene Kontakte der Eingangs-Schnittstellen verwendet werden. Auf diese Weise sind in diesem Fall prinzipiell sechs Kombinationen von zwei Kontakten möglich, so dass ebenso viele verschiedene Quellen detektiert werden können. Zusätzlich umfasst diese Ausführungsform auch Schaltereinrichtungen 3070-3072 um bedarfgemäß Quellen und Verbraucher zu- oder abzuschalten. Im gezeigten Beispiel kann eine an die Eingangs-Schnittstelle 3010 angeschlossene Quelle und an die Ausgangs-Schnittstellen 3020 und 3021 angeschlossene Verbraucher zugeschaltet und/oder abgetrennt werden.

Fig. 4 zeigt eine weitere Ausführungsform der Erfindung. Zur Vermeidung von Wiederholungen wird im Folgenden nur auf die Unterschiede zu den vorherigen Ausführungsformen eingegangen und im Übrigen auf die Beschreibungen der Fig. 1-3 verwiesen. Sich entsprechende Teile sind in Fig. 4 mit ähnlichen Bezugszeichen versehen, die sich nur durch die den Tausender bezeichnende Ziffer unterscheiden. Das erfindungsgemäße Energiemanagement-Modul 4000 umfasst in dieser Ausführungsform eine eigene Energiequelle 4080, eine Mikroprozessoreinrichtung 4090, eine Kommunikationseinrichtung in Form einer Computerschnittstelle 4100 und eine Anzeigeeinrichtung 4110. In dieser Ausführungsform stellt die eigene Energiequelle 4080 des Energiemanagement-Moduls, z.B. in Form einer kleinen Batterie, die Energieversorgung der Mikroprozessoreinrichtung 4090 und der Anzeigeeinrichtung 4110 auch ohne angeschlossene Quellen sicher. Dadurch bleiben Informationen in der Mikroprozessoreinrichtung 4090 gespeichert und können angezeigt werden. An die Computerschnittstelle 4100 kann in diesem Beispiel ein Computer angeschlossen werden, um einen Datenaustausch mit der Mikroprozessoreinrichtung 4090 durchzuführen.

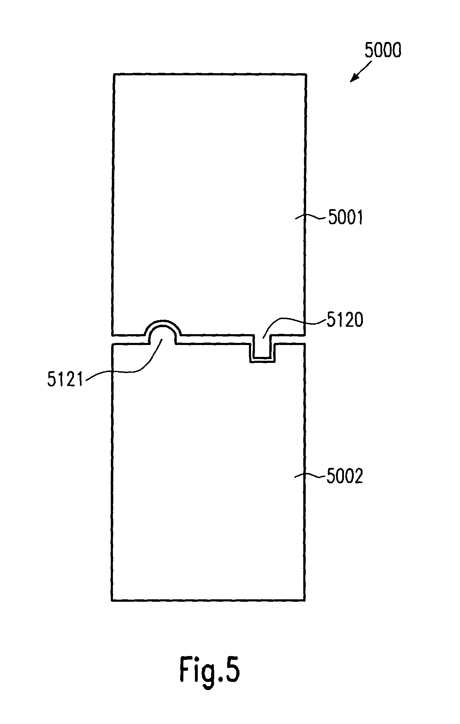

Fig. 5 zeigt ein erfindungsgemäßes Energiemanagement-Modul-System 5000. Dabei sind als Beispiel zwei erfindungsgemäße Energiemanagement-Module 5001 und 5002 über Kupplungseinrichtungen 5120 und 5121 lösbar miteinander verbunden und bilden eine kompakte Einheit. Die Energiemanagement-Module 5001, 5002 können dabei jeweils gemäß einer der unter Bezug auf Fig. 1-4 beschriebenen Ausführungsformen ausgebildet oder gemäß einer anderen geeigneten beliebigen Kombination der zuvor beschriebenen Weiterbildungen ausgeführt sein.

## Patentansprüche

1. Tragbares Energiemanagement-Modul (1000; 2000; 3000; 4000; 5001, 5002) zur Kopplung von Quellen elektrischer Energie mit Verbrauchern elektrischer Energie, umfassend
mehrere Eingangs-Schnittstellen (1010-11; 2010-13; 3010-11; 4010-12) zum Anschließen von Quellen elektrischer Energie;
mehrere Ausgangs-Schnittstellen (1020-21; 2020-23; 3020-22; 4020-23) zum Anschließen von Verbrauchern elektrischer Energie; und
wenigstens eine Energiemanagement-Einrichtung (1030; 2030; 3030; 4030) zur Kopplung von Eingangs-Schnittstellen mit Ausgangs-Schnittstellen, derart, dass wenigstens die folgenden Kopplungen hergestellt werden können:
- eine erste Eingangs-Schnittstelle mit einer ersten Ausgangs-Schnittstelle,
- eine zweite Eingangs-Schnittstelle mit der ersten Ausgangs-Schnittstelle,
- die erste und/oder die zweite Eingangs-Schnittstelle mit einer zweiten Ausgangs-Schnittstelle.

2. Energiemanagement-Modul nach Anspruch 1, wobei die Energiemanagement-Einrichtung einen elektrischen Wandler (1040) oder mehrere elektrische Wandler (2040-42; 3040-41; 4040-43) zur Abstimmung der elektrischen Parameter der Quellen mit den elektrischen Parametern der Verbraucher aufweist.

3. Energiemanagement-Modul nach einem der Ansprüche 1-2, wobei wenigstens zwei Eingangs-Schnittstellen zum Anschließen von verschiedenen Quellen elektrischer Energie ausgestaltet sind und/oder wenigstens zwei Ausgangs-Schnittstellen zum Anschließen von verschiedenen Verbrauchern elektrischer Energie ausgestaltet sind.

4. Energiemanagement-Modul nach einem der Ansprüche 1-3, wobei der eine elektrische Wandler oder die elektrischen Wandler wenigstens einen Spannungswandler und/oder wenigstens einen Stromstärkewandler und/oder wenigstens einen Stromphasenwandler und/oder wenigstens einen Stromgleichrichter und/oder wenigstens einen Stromwechselrichter und/oder wenigstens einen Polaritätswandler und/oder wenigstens einen Schaltregler und/oder wenigstens einen Transverter und/oder wenigstens einen Frequenzwandler und/oder wenigstens einen Frequenzfilter und/oder wenigstens einen dynamischen Wandler und/oder wenigstens einen Laderegler umfassen.

5. Energiemanagement-Modul nach einem der Ansprüche 1-4, weiterhin eine Detektionseinrichtung (2050) umfassend, die automatisch detektiert, ob und an welcher Eingangs-Schnittstelle eine Quelle angeschlossen ist und/oder ob und an welcher Ausgangs-Schnittstelle ein Verbraucher angeschlossen ist, und/oder die automatisch detektiert, welche Quelle und/oder welcher Verbraucher aus einer vorbestimmten Auswahl von möglichen Quellen bzw. möglichen Verbrauchern an eine Eingangs-Schnittstelle bzw. eine Ausgangs-Schnittstelle angeschlossenen ist.

6. Energiemanagement-Modul nach Anspruch 5, wobei die Detektionseinrichtung wenigstens eine kodierte Schnittstelle (3010-11) und/oder eine Messeinrichtung (2060) zum Messen der elektrischen Parameter der angeschlossenen Quellen und Verbraucher umfasst.

7. Energiemanagement-Modul nach einem der Ansprüche 1-6, wobei die Energiemanagement-Einrichtung so ausgestaltet ist, dass vorbestimmte Eingangs-Schnittstellen mit vorbestimmten Ausgangs-Schnittstellen koppelbar sind.

8. Energiemanagement-Modul nach einem der Ansprüche 1-7, wobei die Energiemanagement-Einrichtung so ausgestaltet ist, dass die Eingangs-Schnittstellen mit angeschlossenen Quellen automatisch mit den Ausgangs-Schnittstellen mit angeschlossenen Verbrauchern koppelbar sind.

9. Energiemanagement-Modul nach einem der Ansprüche 1-8, weiterhin Schaltereinrichtungen (3070-72) umfassend, so dass in Abhängigkeit der Energiebereitstellung durch die Quellen und/oder des Energiebedarfs der Verbraucher einzelne Eingangs-Schnittstellen und/oder Ausgangs-Schnittstellen manuell und/oder automatisch zu- und/oder abschaltbar sind.

10. Energiemanagement-Modul nach Anspruch 9, wobei die Energiemanagement-Einrichtung so ausgestaltet ist, dass eine automatische Priorisierung vorbestimmter Quellen und/oder vorbestimmter Verbraucher erfolgt.

11. Energiemanagement-Modul nach einem der Ansprüche 1-10, wobei wenigstens eine Eingangs-Schnittstelle in eine Ausgangs-Schnittstelle und/oder wenigstens eine Ausgangs-Schnittstelle in eine Eingangs-Schnittstelle manuell oder automatisch umschaltbar ist.

12. Energiemanagement-Modul nach einem der Ansprüche 1-11, wobei eine oder mehrere Schnittstellen in Form von Steckverbindungen ausgestaltet sind, und/oder wobei wenigstens eine Schnittstelle eine Induktions-Einrichtung zum induktiven Anschließen von Quellen und/oder Verbrauchern umfasst.

13. Energiemanagement-Modul nach einem der Ansprüche 1-12, wobei an die Eingangs-Schnittstellen eine Batterie und/oder eine Brennstoffzelle und/oder eine Solarzelle und/oder ein Dieselgenerator und/oder ein Stromnetz anschließbar sind, und/oder an die Ausgangs-Schnittstellen ein Laptop und/oder ein Funkgerät und/oder eine Lampe und/oder wenigstens eine Batterie zum Laden anschließbar sind.

14. Energiemanagement-Modul nach Anspruch 13, wobei die Energiemanagement-Einrichtung so ausgestaltet ist, dass beim Laden der wenigstens einen Batterie eine Laderegelung erfolgt.

15. Energiemanagement-Modul nach einem der Ansprüche 1-14, weiterhin umfassend wenigstens eine eigene Energiequelle (4080) und/oder wenigstens einen eigenen Energiespeicher, wobei letzterer als dynamischer Energiespeicher ausgestaltet sein kann.

16. Energiemanagement-Modul nach einem der Ansprüche 1-15, weiterhin umfassend eine Informationsspeichereinrichtung zur Speicherung von Daten, und/oder eine Mikroprozessoreinrichtung (4090), in der ein Computerprogramm zur automatischen Steuerung der Eingangs- und/oder der Ausgangs-Schnittstellen und/oder der elektrischen Wandler ausgeführt werden kann.

17. Energiemanagement-Modul nach einem der Ansprüche 1-16, weiterhin umfassend wenigstens eine Kommunikationseinrichtung.

18. Energiemanagement-Modul nach Anspruch 17, wobei die wenigstens eine Kommunikationseinrichtung umfasst: eine Computerschnittstelle (4100), an die ein Computer zur Datenübermittlung anschließbar ist, und/oder eine Funkschnittstelle, an die eine Funkeinrichtung zur Datenübermittlung anschließbar ist.

19. Energiemanagement-Modul nach einem der Ansprüche 1-18, weiterhin umfassend wenigstens eine Anzeigeeinrichtung (4110) zum Anzeigen der Information welche Schnittstellen belegt sind und/oder zum Anzeigen der Information welche Quellen und/oder Verbraucher angeschlossen sind und/oder zum Anzeigen wenigstens eines Teils der elektrischen Parameter der angeschlossenen Quellen und/oder Verbraucher, und/oder in Kombination mit Anspruch 16 oder 17 zum Anzeigen von Daten der Kommunikationseinrichtung.

20. Energiemanagement-Modul nach einem der Ansprüche 1-19, weiterhin umfassend ein Gehäuse (1200; 2200; 3200; 4200), innerhalb dessen die wenigstens eine Energiemanagement-Einrichtung mit dem oder den elektrischen Wandlern angeordnet ist, und wobei die Eingangs- und Ausgangs-Schnittstellen so in das Gehäuse integriert sind, dass die Quellen und Verbraucher von außerhalb des Gehäuses an die Eingangs- bzw. Ausgangs-Schnittstellen angeschlossen werden können.

21. Energiemanagement-Modul nach einem der Ansprüche 1-20, weiterhin umfassend wenigstens eine Kupplungseinrichtung (5120-21), so dass wenigstens zwei derartige Module lösbar miteinander verbunden werden können, wobei die wenigstens eine Kupplungseinrichtung auch elektrische Verbindungseinrichtungen zu den Eingangs-Schnittstellen und/oder den Ausgangs-Schnittstellen und/oder der wenigstens einen Energiemanagement-Einrichtung umfassen kann.

22. Energiemanagement-Modul-System (5000), umfassend wenigstens zwei Energiemanagement-Module nach Anspruch 21, die miteinander verbunden sind.
